# EUROPEAN PATENT SPECIFICATION

(11) **EP 1 931 039 B1**
(45) Date of publication and mention of the grant of the patent: **21.05.2014**
(21) Application number: 07122195.6
(22) Date of filing: 04.12.2007
(51) Int. Cl.: B60R 11/02

(54) **Electronic apparatus, electronic system and method of controlling sound output**
Elektronische Vorrichtung, elektronisches System und Verfahren zur Steuerung der Tonausgabe
Appareil et système électronique et procédé pour le contrôle de la sortie de sons

(30) Priority: 04.12.2006 JP 2006327663; 04.12.2006 JP 2006327664; 04.12.2006 JP 2006327665; 27.12.2006 US 645629; 27.12.2006 US 645642; 27.12.2006 US 645628; 27.12.2006 US 645672; 28.12.2006 US 646539; 28.12.2006 US 646477; 28.12.2006 US 646557; 28.12.2006 US 646478; 28.12.2006 US 646558; 28.12.2006 US 646498; 28.12.2006 US 646538; 28.12.2006 US 646479
(43) Date of publication of application: 11.06.2008
(73) Proprietor: FUJITSU TEN LIMITED, Kobe-shi Hyogo 652-8510 (JP)
(72) Inventor: Takimoto, Tatsuhiko, Kobe-shi Hyogo 652-8510 (JP); Koutari, Hiroshi, Kobe-shi Hyogo 652-8510 (JP)
(74) Representative: Ward, James Norman

(56) References cited:
- US-A- 4 542 421
- US-A- 5 537 673
- US-A1- 2004 204 159

## Description

This invention relates to an electronic system having an electronic apparatus mounted in a vehicle and a portable electronic apparatus attachable and detachable to and from the electronic apparatus.

As conventional navigation apparatuses, there are widely known small-sized portable navigation apparatuses with simplified structure and portability (hereinafter, referred to as Portable Navi), also known as PND (Personal Navigation Device); and in-vehicle navigation apparatuses accommodated and fixed in a recess portion (DIN opening) formed in a dashboard of a vehicle. The in-vehicle navigation apparatuses are capable of guiding with high accuracy by use of the information supplied from vehicles such as vehicle speed, and some of the in-vehicle navigation apparatuses are equipped with audio devices.

In recent years, the navigation apparatuses with portability of the Portable Navi and high-accuracy guide function of the in-vehicle navigation apparatus have been studied.

Japanese Patent Application Publication No. 8-318792, Japanese Patent Application Publication No. 2002-328026, Japanese Patent Application Publication No. 2005-524570, and Japanese Patent Application Publication No. 2001-239895 disclose a configuration where a navigation portion can be detached from an in-vehicle apparatus mounted in a vehicle. By removing the navigation portion from the in-vehicle apparatus, the navigation portion can be used as a Portable Navi of a single unit.
Also, as disclosed in Japanese Patent Application Publication No. 2003-166848, the navigation apparatus is taken out of the vehicle and can be used while walking. In addition, when mounted in a vehicle, the navigation apparatus is in a car-navigation mode, and when taken out of the vehicle, the navigation apparatus is in a person-navigation mode.

However, when Portable Navi is removed from the in-vehicle apparatus with the audio guidance of the Portable Navi being output from the speaker of the in-vehicle apparatus, a noise sound generated at the time of removal is output from the speaker of the in-vehicle apparatus. This will cause discomfort to passengers of a vehicle.

US 5537673 discloses a car stereo having a removable panel in the form of a radio telephone provided with operation buttons thereon.

US 4542421 discloses a muting circuit in combination with a tape recorder.

US 2004/0204159 discloses an activation system and method for establishing a cellular voice communication through a radio system in a vehicle.

The present invention has been made in view of the above circumstances and provides an electronic apparatus, an electronic system, and a method of controlling audio output, by which a noise generated at the time of removal of a portable electronic apparatus can be attenuated.

According to one aspect of the present invention, there is provided an electronic apparatus as defined in claim 1. Accordingly, when the portable electronic apparatus is removed (detached) from the electronic apparatus, the output of the audio signal to the sound adjusting portion is suppressed and the generation of a noise sound can be attenuated at the time of removal of the portable electronic apparatus.

Preferred embodiments are defined in the dependent claims. According to another aspect of the present invention, there is provided a method of controlling audio output of an electronic apparatus as defined in claim 7. This can attenuate the generation of a noise sound at the time of removal of the portable electronic apparatus.

Exemplary embodiments of the present invention will be described in detail with reference to the following drawings, by way of example only, wherein:
FIG. 1A shows an exterior view of an in-vehicle system and FIG. 1B shows a state where a portable apparatus is detached from an in-vehicle apparatus;
FIG. 2 shows a front face portion of the in-vehicle apparatus, from which the portable apparatus is removed;
FIG. 3 is a view showing a state of tilting the front face portion against the main body of the in-vehicle apparatus to expose a CD insertion/ejection slot;
FIG. 4 shows a state of mounting the in-vehicle system in a vehicle;
FIG. 5 shows a configuration of the in-vehicle system;
FIG. 6 shows a configuration of a detecting circuit;
FIG. 7 shows a configuration of the front face portion;
FIG. 8A through FIG. 8C show display examples of the portable apparatus attached to a main body;
FIG. 9 is a block diagram showing a configuration of a sound adjusting portion;
FIG. 10A shows a front view, top view, bottom view, left-side view, and right-side view of the portable apparatus, and FIG. 10B is a back view of the portable apparatus;
FIG. 11 is a flowchart showing a procedure of a controller of the in-vehicle apparatus; and
FIG. 12 is a view showing a configuration for determining a noise sound at the time of removing the portable electronic apparatus to suppress the sound to be output.

A description will now be given, with reference to the accompanying drawings, of exemplary embodiments of the present invention.

### (Embodiment)

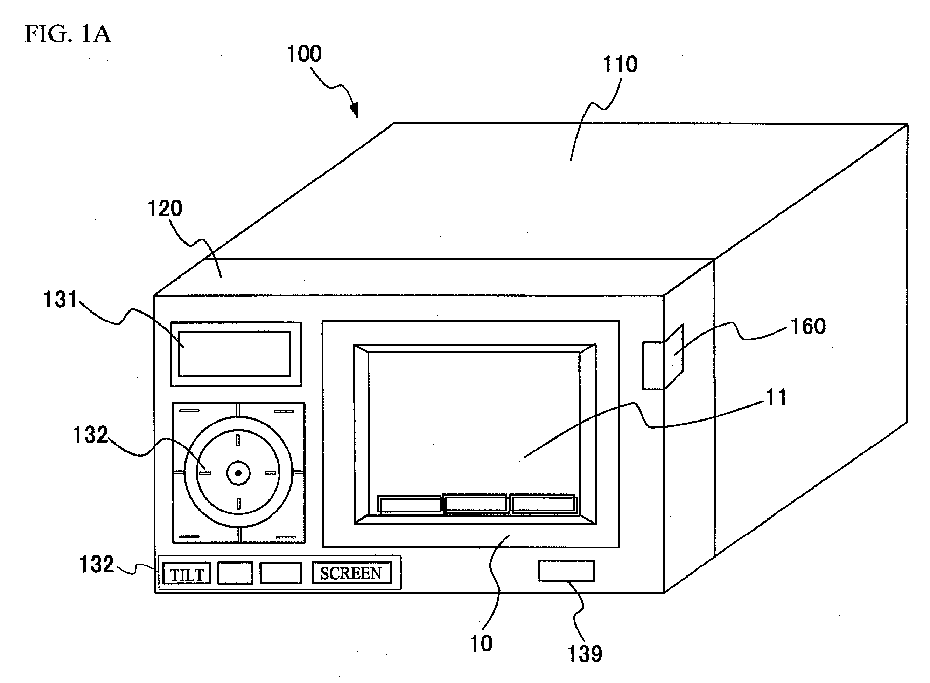

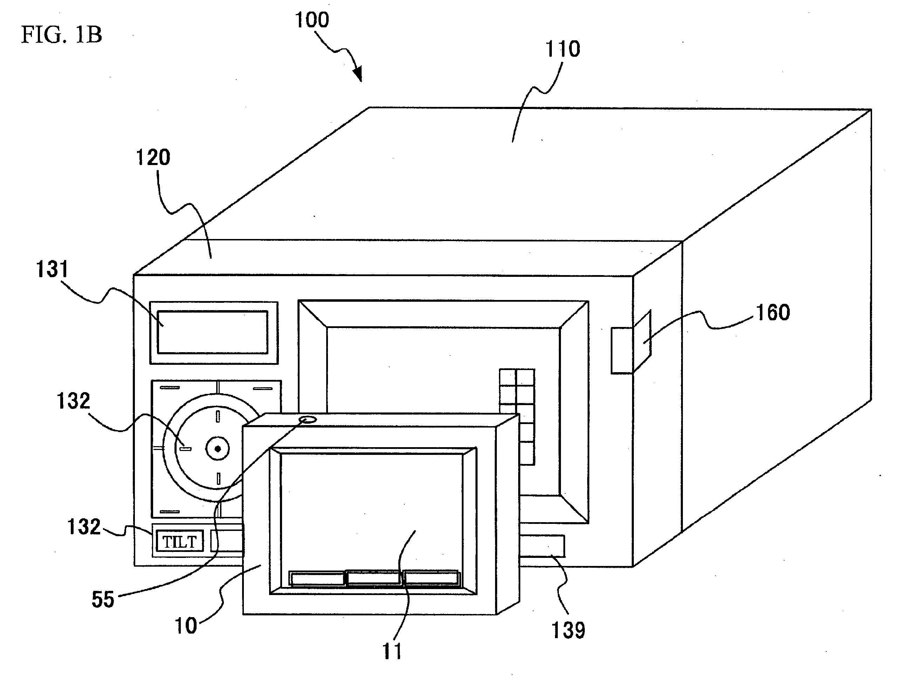

FIG. 1A and FIG. 1B show exterior views of an in-vehicle system 1, as an example of an electronic system. As shown in FIG. 1A and FIG. 1B, the in-vehicle system 1 is composed of: an in-vehicle apparatus 100 (electronic apparatus); and a portable electronic apparatus 10 (portable apparatus) with navigation capabilities. The portable apparatus 10 can be used after being attached at a front face portion 120 of the in-vehicle apparatus 100, as shown in FIG. 1A, and can be also used after being detached from the in-vehicle apparatus 100, as shown in FIG. 1B.

The in-vehicle apparatus 100 is capable of playing radio broadcasting or playing music data recorded on a memory medium such as a CD (Compact Disc) or the like, and the in-vehicle apparatus 100 includes: an in-vehicle apparatus main body 110 having a CD player and a CD insertion/ejection slot; and the front face portion 120 having a display portion 131 and an operating portion (main operating portion) 132.

The portable apparatus 10 has navigation capabilities of searching for a guiding path (route) to a destination and displaying the searched guiding path (route) over a map.

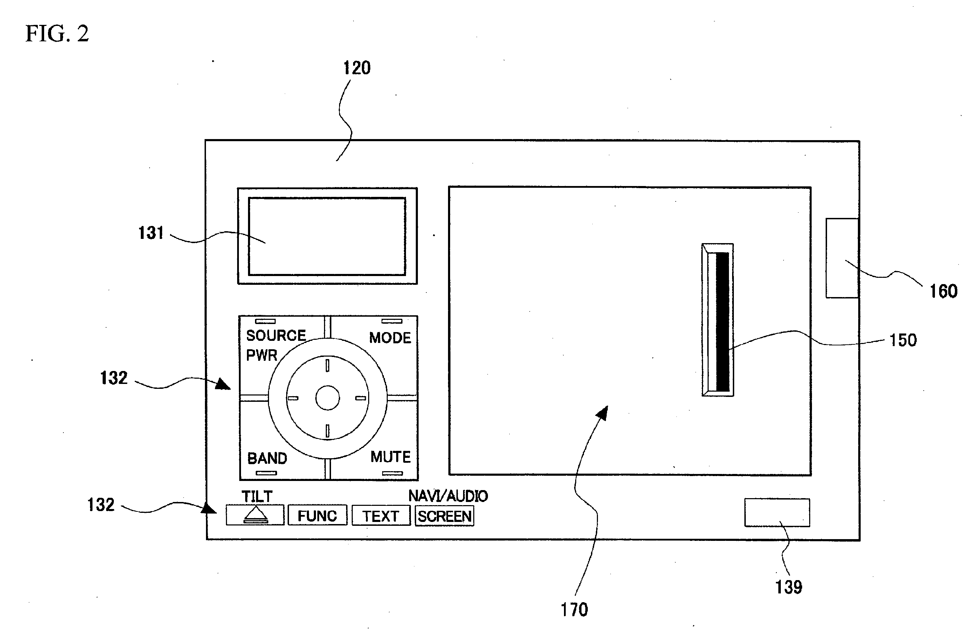

FIG. 2 shows the front face portion 120 of the in-vehicle apparatus 100, from which the portable apparatus 10 is removed. There is provided an attaching portion 170 in which a recess portion is defined for attaching the portable apparatus 10, at the front face portion 120 of the in-vehicle apparatus 100. The attaching portion 170 is provided with: a connector 150 (housing portion side connector) for electrically coupling the in-vehicle apparatus 100 and the portable apparatus 10; and a lock mechanism (not shown) for securing the portable apparatus 10 to the front face portion 120. When a detach button 160 provided at the front face portion 120 is operated, a lock mechanism, not shown, is unlocked and the portable apparatus 10 is detachable from the in-vehicle apparatus 100.

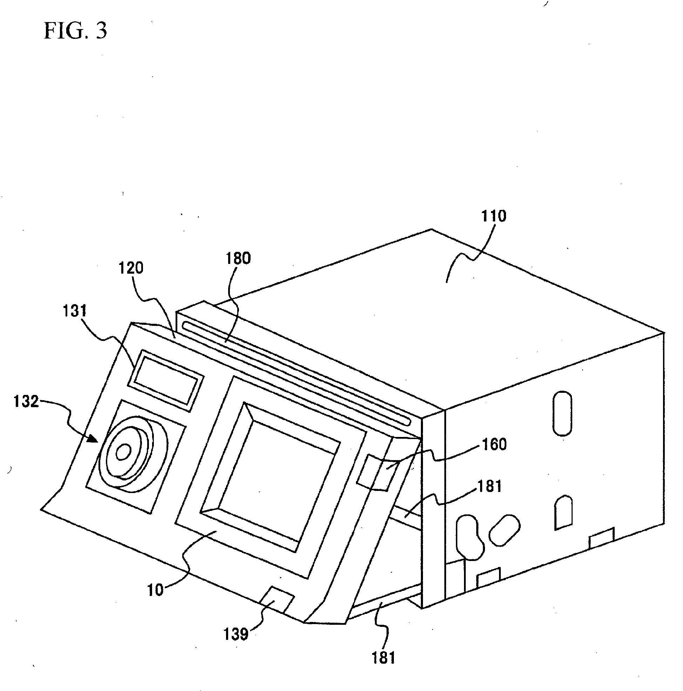

FIG. 3 shows a state of tilting the front face portion 120 against the in-vehicle apparatus main body 110 to expose a CD insertion/ejection slot 180.

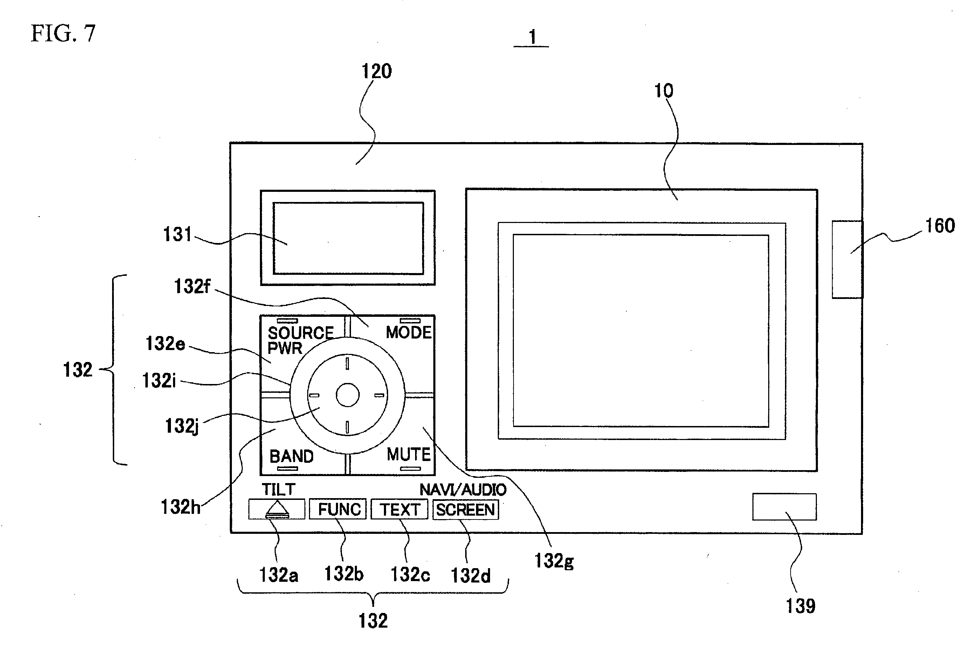

By driving a slider 181 shown in FIG. 3 with a drive mechanism, not shown, the front face portion 120 can be tilted against the in-vehicle apparatus main body 110. By tilting operation, the CD insertion/ejection slot 180 provided in the in-vehicle apparatus main body 110 is exposed, so a CD can be inserted or ejected. There is provided an operation button (a tilt/eject button 132a shown in FIG. 7), at the front face portion 120 of the in-vehicle apparatus 100, and a tilt angle can be set according to the operation of the button.

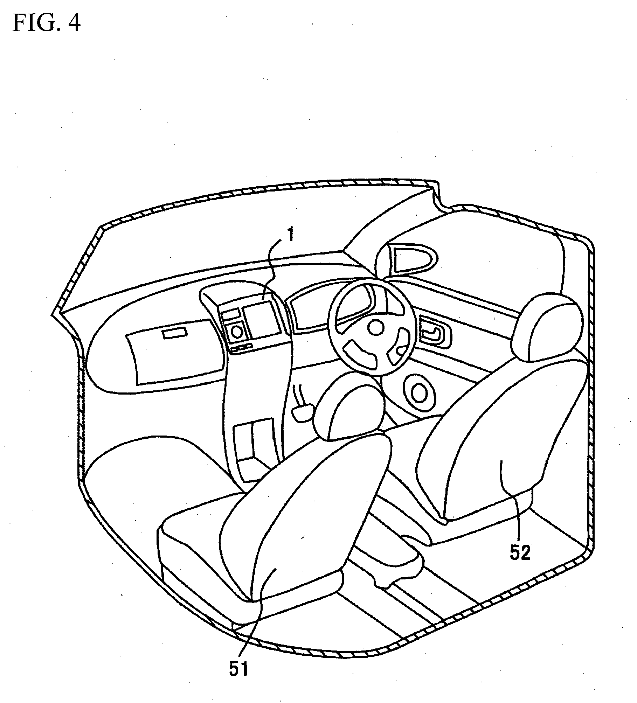

FIG. 4 illustrates an example of mounting the in-vehicle system 1 in a vehicle.

The in-vehicle system 1 is disposed in a dashboard portion substantially in the middle of a front-passenger's seat 51 and a driver's seat 52, as shown in FIG. 4, for example.

Here, a GPS (Global Positioning System) antenna, not shown, of a GPS information receiver 133 is located on the dashboard or attached at an inner side of a front glass (windscreen).

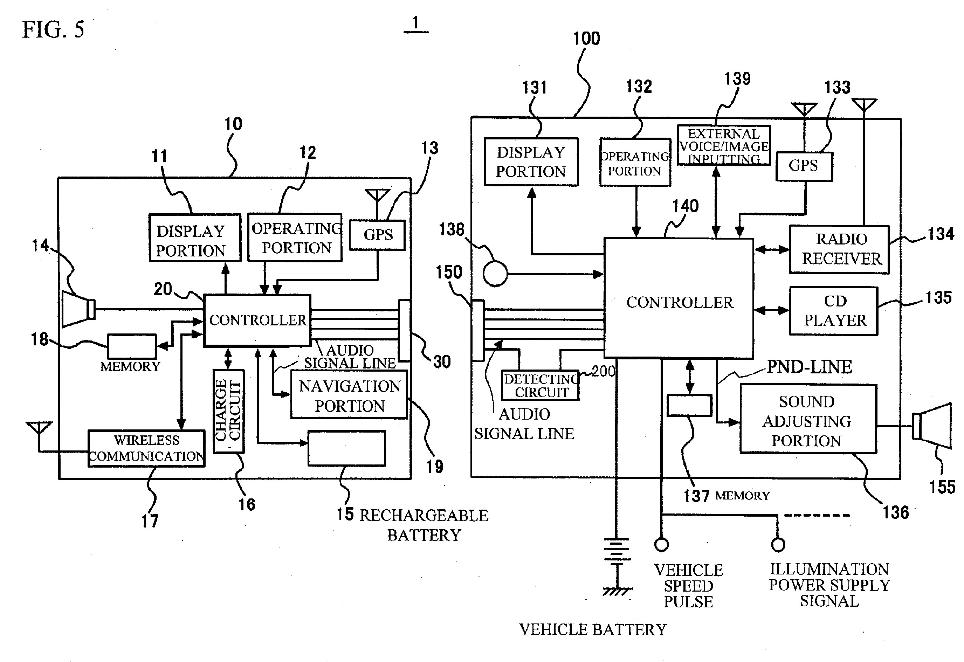

FIG. 5 is a block diagram showing a schematic configuration of the in-vehicle system 1.

The in-vehicle apparatus 100 and the portable apparatus 10 are electrically connected by connectors. The connector 150 is provided at the in-vehicle apparatus 100 side, and a connector 30 (portable apparatus side connector) is provided at the portable apparatus 10. By connecting the connectors 150 and 30, various signals are sent and received between the in-vehicle apparatus 100 and the portable apparatus 10 to function as the in-vehicle system 1. The connectors 150 and 30 are respectively provided with power supply terminals for supplying power to the portable apparatus 10 from the battery of the vehicle. When the portable apparatus 10 is connected to the in-vehicle apparatus 100 and power is supplied to the in-vehicle apparatus 100, the power is also supplied to the portable apparatus 10 via the power supply terminals.

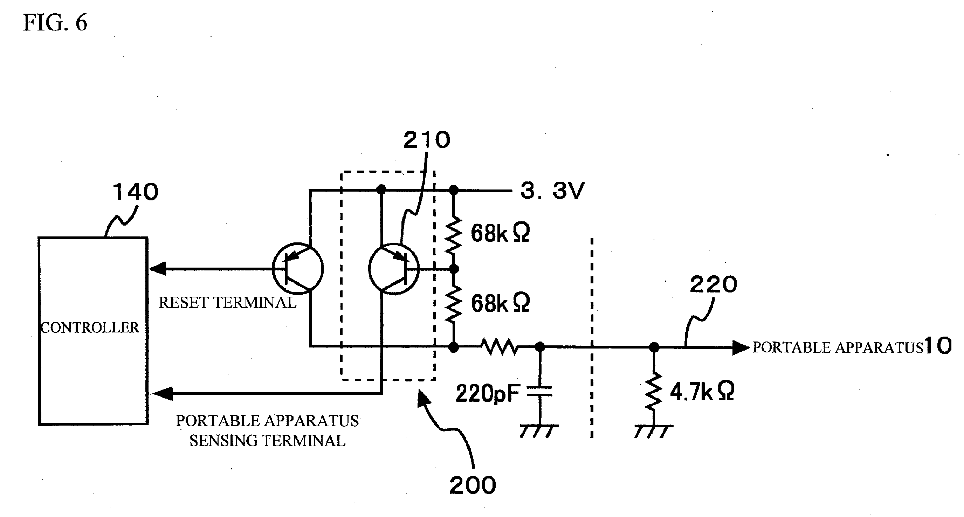

Also, at a connecting portion connecting the in-vehicle apparatus 100 and the portable apparatus 10, there is provided a detecting circuit 200 detecting whether or not the portable apparatus 10 is connected to the in-vehicle apparatus 100. FIG. 6 shows a configuration of the detecting circuit 200.

When the portable apparatus 10 is connected to a power line 220 for supplying power to the portable apparatus 10, a transistor 210 turns on. Accordingly, when the portable apparatus 10 is connected to the power line 220, a signal of 3.3 V is output to a controller 140 of the in-vehicle apparatus 100. Also, when the portable apparatus 10 is removed from the power line 220, the transistor 210 turns off. Then, a signal of 0 V is output to the controller 140 of the in-vehicle apparatus 100.

When the output voltage of 3.3 V is sensed at a portable apparatus sensing terminal connecting the transistor 210 and the controller 140, the controller 140 senses a connected state. When 0 V is sensed, the controller 140 senses an unconnected state.

The in-vehicle apparatus 100 is provided with:
the display portion 131; the operating portion 132; the GPS information receiver 133; a radio receiver 134; a CD player 135; a sound adjusting portion 136; a memory 137; a microphone 138; an external voice/image inputting portion 139; the controller 140; and the connector 150. The in-vehicle apparatus 100 is activated by supplying the power from the battery of the vehicle, when the engine key is positioned at Acc or IG.

Hereinafter, the function of each part will be described in detail.

The display portion 131 is provided with a liquid crystal panel and a backlight, and displays a frequency of the received broadcasting, a track number of music being played, a music name being played, and the like, according to the 13-segment display.

The operating portion 132 is provided for selectively changing the operation mode of the in-vehicle apparatus 100, and for operating in various modes that have been changed. The operating portion 132 is provided with a group of buttons including: the tilt/eject button 132a; a function (represented as FUNC in the drawing)/AF button 132b; a TEXT button 132c; a SCREEN button 132d; a SOURCE/PWR button 132e; a MODE button 132f; a MUTE button 132g; a BAND change button 132h; a rotary button 132i; a cross key/enter key button 132j, as shown in FIG. 7.

Here, a description will be given of switching the display between the portable apparatus 10 and the in-vehicle apparatus 100.

Firstly, the in-vehicle apparatus 100 turns on when the SOURCE/POWER button 132e of the in-vehicle apparatus 100 is pushed. When the SOURCE/POWER button 132e is pushed for a short period of time while the portable apparatus 10 is on, the source is changed to the CD playing or radio broadcasting. At this time, the information on the selected source is displayed on the display portion 131 of the in-vehicle apparatus 100, and the navigation image is displayed on a display portion 11 of the portable apparatus 10, without relation to the source.

Next, when the SCREEN button 132d is pushed, the navigation image displayed on the display portion 11 of the portable apparatus 10 can be changed to an image corresponding to the source selected at the in-vehicle apparatus 100.

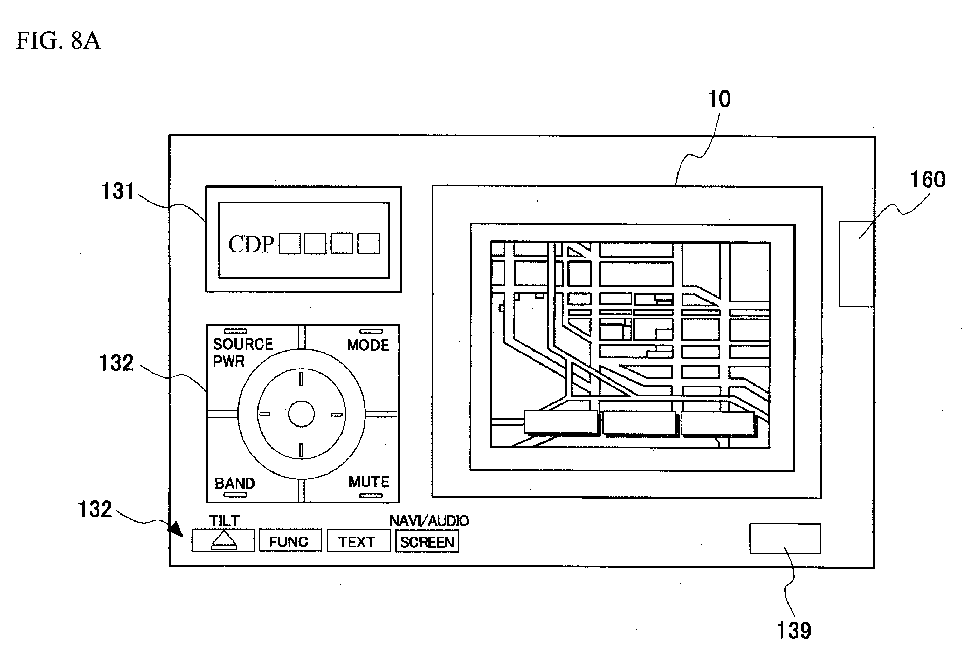

FIG. 8A shows a state where the portable apparatus 10 is attached to the in-vehicle apparatus 100 while the CD is being played and a navigation image is being displayed on the portable apparatus 10.

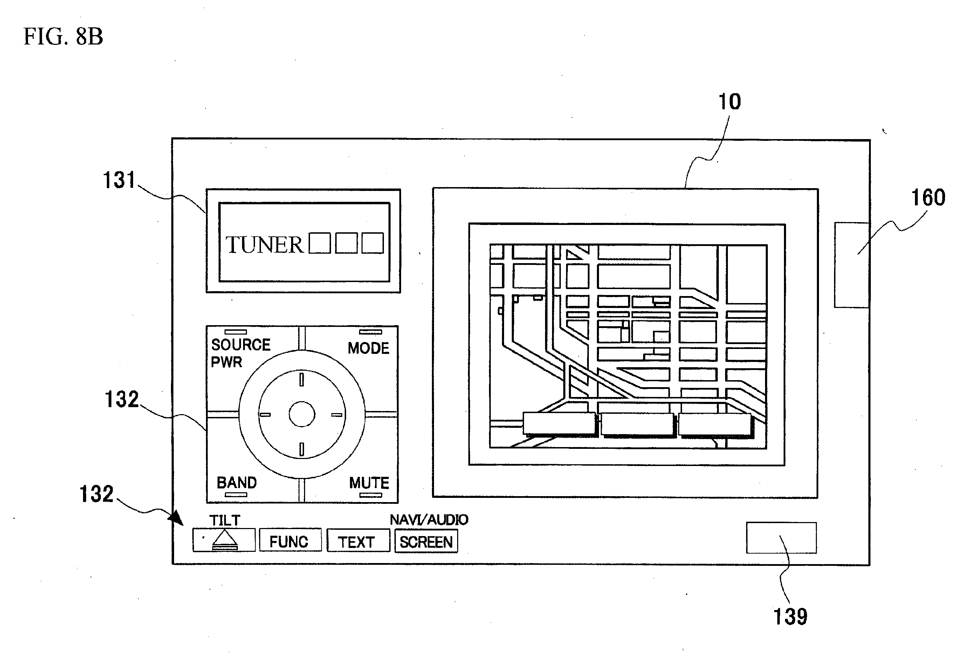

When the SOURCE/POWER button 132e is pushed in the state of FIG. 8A and the source is changed from the CD playing to the radio broadcasting, the information on the radio source is displayed on the display portion 131, as shown in FIG. 8B. Also, the navigation image remains being displayed on the display portion 11 of the portable apparatus 10.

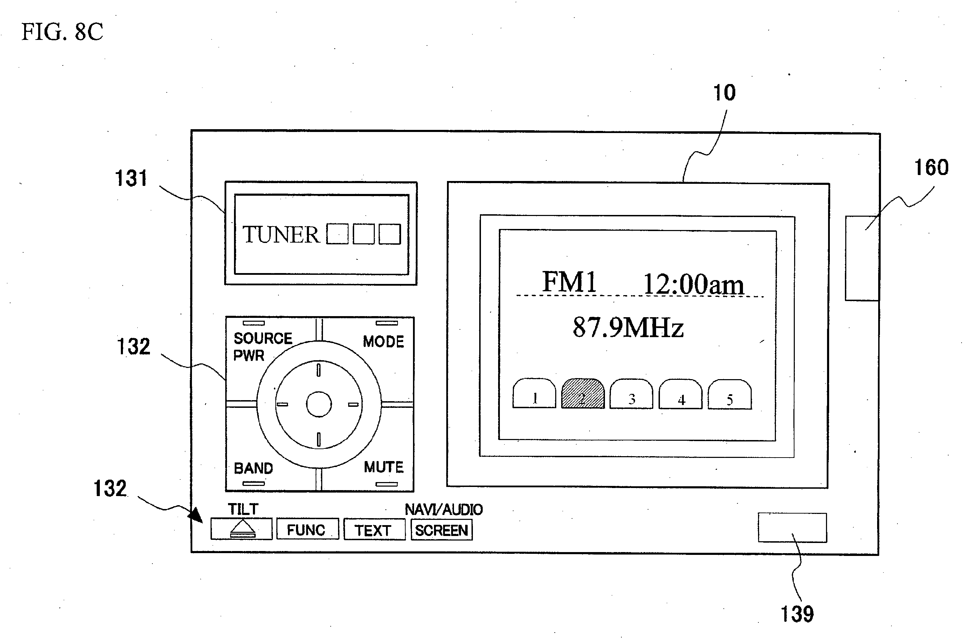

Then, when a user pushes the SCREEN button 132d, the image corresponding to the source being processed by the in-vehicle apparatus 100 is displayed on the display portion 11 of the portable apparatus 10, as shown in FIG. 8C (radio image is displayed in FIG. 8C). A touch panel, described later, is provided in the display portion 11 of the portable apparatus 10. A user is capable of operating the source currently being processed, by selecting the operation buttons displayed on the display portion 11.

In addition, when the SCREEN button 132d is pushed with the radio screen being displayed on the display portion 11, it is possible to return to the navigation image from the radio image, as shown in FIG. 8B. When the portable apparatus 10 is removed from the in-vehicle apparatus 100, the operation of the SCREEN button 132d is invalid.

Furthermore, when a USB (Universal Serial Bus) or the like is connected to the external voice/image inputting portion 139 with the portable apparatus 10 removed from the in-vehicle apparatus 100, it is possible to prevent the change to the USB source, even if the SOURCE/POWER button 132e is pushed.

Referring back to FIG. 5, the GPS information receiver 133 includes a GPS antenna and a tuner, and receives GPS signals from a satellite. The GPS signal received by the GPS information receiver 133 is output through the controller 140, the connector 150, the connector 30, and a controller 20, to a navigation portion 19 of the portable apparatus 10, and then the position of the vehicle in which the in-vehicle apparatus 100 having the portable apparatus 10 therein is determined based on the GPS signal.

Herein, the GPS signal may be output to the navigation portion of the portable apparatus 10 through the controller 140, instead of through the controller 20. Alternatively, the GPS information receiver 133 may be composed of the GPS antenna only, so that the GPS signal received by the GPS antenna may be output to the tuner of a GPS information receiver 13, described later, without passing through the controller 140 or the controller 20. Further alternatively, the GPS signal received by a GPS antenna may be output through the controller 20 to the tuner of the GPS information receiver 13 without passing through the controller 140. Various changes may be made as necessary.

The radio receiver 134 has an antenna and a tuner, receives broadcast waves such as AM broadcasting, FM broadcasting, and sound multiplex broadcasting, outputs stereo audio signals, receives and demodulates multiplex data, and outputs the demodulated signal to the controller 140.

The CD player 135 reproduces the data stored in the CD, and outputs the reproduced signal to the controller 140.

Herein, the demodulated signal output from the radio receiver 134 may be output to the sound adjusting portion 136, described later, without passing through the controller 140.

The sound adjusting portion 136 implements signal processing such as volume control or tone control on an audio signal received or demodulated by the radio receiver 134 or the audio signal reproduced by the CD player 135, and then outputs the processed signal to a speaker 155 (first audio outputting portion).

The memory 137 may be composed of a RAM (Random Access Memory) from which data is readable and into which data is writable, and temporarily stores information necessary for control.

The microphone 138 is provided for hands-free communication, and takes in user's voices in the vehicle.

The external voice/image inputting portion 139 is provided with a connection terminal with an external device such as a USB memory, portable audio device, or the like so that an audio signal or data from the external device may be input. The external voice/image inputting portion 139 then sends the signal or data to the controller 140, and outputs the audio signal, data, or the like to the external device connected.

The controller 140 controls the radio receiver 134, the CD player 135, and the sound adjusting portion 136, according to the operation by means of the operating portion 132.

Also, the controller 140 outputs various signals through the connector 150 to the portable apparatus 10, and controls the in-vehicle apparatus 100 on the basis of the various signals input from the portable apparatus 10. For example, the controller 140 outputs the GPS signal received by the GPS information receiver 133 or the audio signal input through the microphone 138, to the portable apparatus 10 by way of the connector 150.

Here, the audio signal input through the microphone 138 may be output to the portable apparatus 10 by way of the connector 150, without passing through the controller 140.

In addition, the voice on communication over a mobile phone connected to the portable apparatus 10 is input through the connector 150 into the controller 140, and is then output through the sound adjusting portion 136 to the speaker 155.

Furthermore, the controller 140 acquires an operation signal corresponding to a menu image of various modes displayed on the display portion 11 of the portable apparatus 10, from the controller 20 of the portable apparatus 10, and then controls the radio receiver 134 and the CD player 135.

Also, power is supplied to the controller 140 from the battery mounted in the vehicle. When the portable apparatus 10 is connected, the controller 140 outputs the power supplied from the battery to the portable apparatus 10.

Here, a vehicle speed pulse and an illumination power supply signal are input into the controller 140 from a vehicle. The controller 140 transfers such input vehicle speed pulse to the controller 20 of the portable apparatus 10. Meanwhile, the vehicle speed pulse may be configured not to be input into the in-vehicle apparatus 100.

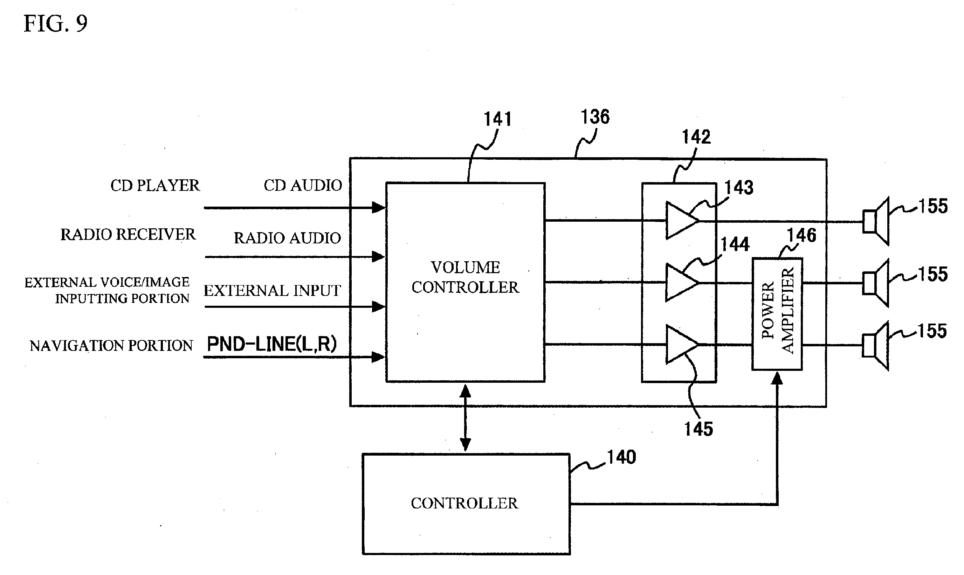

FIG. 9 is a block diagram showing a configuration of the sound adjusting portion.

The sound adjusting portion 136 includes: a volume controller 141; a preamplifier portion 142; and a power amplifier 146, as shown in FIG. 9.

The volume controller 141 is connected to the radio receiver 134, the CD player 135, the external voice/image inputting portion 139, and the navigation portion 19 by signal lines. The radio receiver 134, the CD player 135, and the external voice/image inputting portion 139 are coupled through the controller 140 to the volume controller 141. Also, the navigation portion 19 is connected to the controller 20, as shown in FIG. 5, an audio signal line LINE connecting the controller 20 and the controller 140 outputs the audio signal to the controller 140. Here, an external input line shown in FIG. 9 is a line for inputting audio data from an external apparatus connected to the external voice/image inputting portion 139, and a PND-LINE is a line for inputting audio data from the portable apparatus 10.

The volume controller 141 selects one of an audio signal output from the radio receiver 134, an audio signal of a CD output from the CD player 135, an audio signal of navigation information output from the navigation portion 19, according to an instruction given by the controller 140. The volume controller 141 adjusts the audio signal so that the volume level of the selected audio signal may be equal to the volume level set by a user, and then outputs the audio signal to the preamplifier portion 142.

The speaker 155 is generally provided at both sides of the front of a vehicle and at both sides of the rear thereof, respectively. However, in the present exemplary embodiment, a subwoofer is further included for obtaining the sound with more powerful and realistic characteristics.

Therefore, the preamplifier portion 142 includes three preamplifiers, that is, a front speaker preamplifier 145 arranged at the both sides of the front of a vehicle; a rear speaker preamplifier 144 arranged at the both sides of the rear thereof; and a subwoofer preamplifier 143.

The audio signals fed to the front speaker preamplifier 145 and to the rear speaker preamplifier 144 are preliminarily amplified by the front speaker preamplifier 145 and the rear speaker preamplifier 144, and the power is amplified by the power amplifier 146 and then output to the speaker 155. The audio signal output to the subwoofer preamplifier 143 is amplified by the subwoofer preamplifier 143 and then output to the speaker 155.

Next, a description will be given of the portable apparatus 10. The portable apparatus 10 is provided with: the display portion 11; an operating portion 12; the GPS information receiver 13; a speaker (second audio outputting portion) 14; a rechargeable battery 15; a charge circuit 16; a wireless communication transmitter/receiver 17; a memory 18; the navigation portion 19; the controller 20; and the connector 30.

Hereinafter, functions of the components will be described in detail.

The display portion 11 is provided with a liquid crystal panel and a backlight, and is capable of displaying map information generated by the navigation portion 19 and guiding path (route) information to a destination, the received broadcasting frequency transferred from the in-vehicle apparatus 100, a music track number played, music name played, and the like.

Here, the display portions 11 and 131 may employ a flat panel display other than a liquid crystal panel. Examples are organic light emitting display, plasma display panel, cold-cathode flat panel display, or the like.

The touch panel 12 is, for example, disposed on the display screen. When the touch panel is touched by a finger or a dedicated pen, the touched position is detected to determine whether or not there is an input operation.

The GPS information receiver 13 includes an antenna and a tuner, and receives the GPS signal from a satellite. Such received GPS signal is output to the navigation portion 19, and the vehicle location is detected based on the GPS signal. Meanwhile, the in-vehicle apparatus 100 is also provided with the GPS information receiver 133. However, when the portable apparatus 10 is attached to the in-vehicle apparatus 100, the location of the vehicle is identified by use of the GPS signal (and the vehicle speed pulse) received by the GPS information receiver 133. When the portable apparatus 10 is used alone, the location thereof is specified by use of the GPS signal received by the GPS information receiver 13.

The speaker 14 is provided for outputting the audio information of the navigation portion 19, and outputs the audio information only when the portable apparatus 10 is detached from the in-vehicle apparatus 100, namely, used alone separately.

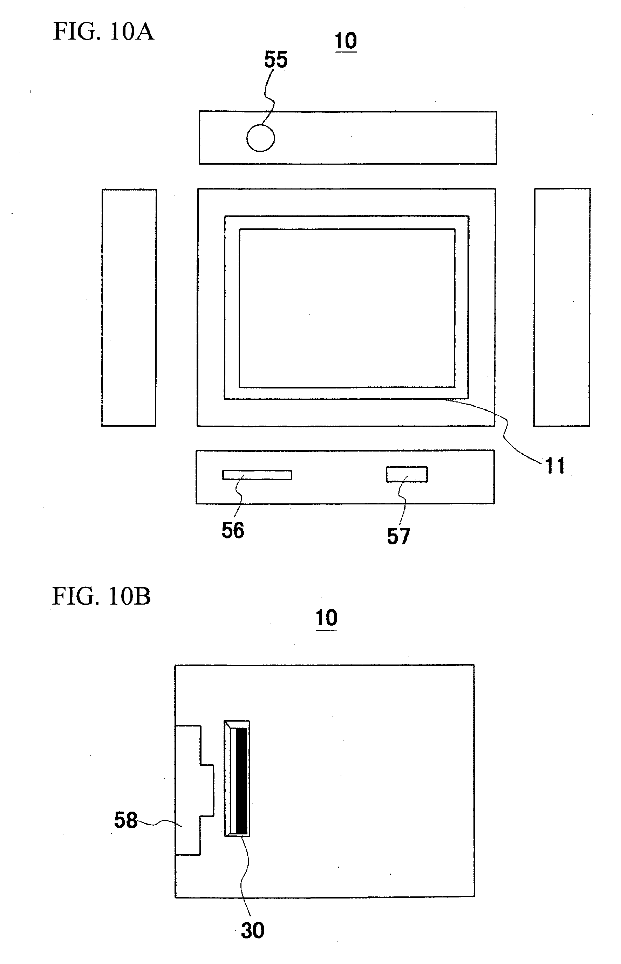

The rechargeable battery 15 supplies power to each portion of the portable apparatus 10, when the portable apparatus 10 is detached from the in-vehicle apparatus 100. When the portable apparatus 10 is attached to the in-vehicle apparatus 100, the power is supplied through the power supply terminals of the connector 30 from the battery of the vehicle and the rechargeable battery 15 is charged by the charge circuit 16. Also, the charge circuit 16 can be supplied with power from the connection terminal through a USB slot 57 (see FIG. 10A), and the rechargeable battery 15 can be charged in this way.

The wireless communication transmitter/receiver 17 sends and receives the voice on communication over a mobile phone, and acquires the information used for navigation over the mobile phone. For example, Bluetooth, which is a wireless transmission system at 2.4 GHz band, is used for the wireless communication transmitter/receiver 17.

The memory 18 may be a RAM from which data is readable and into which the data is writable, and temporarily stores the information read for each control.

The navigation portion 19 includes a map information storing portion that stores the map information used for navigation, determines current location information with GPS signal from the GPS information receiver 133 or the GPS information receiver 13, and creates a map image for navigation. The created map image may be displayed on the display portion 11. In addition, when the in-vehicle apparatus 100 and the portable apparatus 10 are connected, the vehicle speed pulse is acquired from the vehicle so that the accuracy of the location detection of the vehicle can be improved.

The controller 20 controls each part of the portable apparatus 10. Also, the controller 20 outputs various signals to the in-vehicle apparatus 100 through the connector 30, and controls the portable apparatus 10 based on the various signals input from the in-vehicle apparatus 100. For example, the controller 20 acquires the GPS signal received by the GPS information receiver 133 of the in-vehicle apparatus 100, and outputs it to the navigation portion 19. Also, the controller 20 acquires the audio signal input by the microphone 138 of the in-vehicle apparatus 100 from the controller 140 of the in-vehicle apparatus 100, and controls the navigation portion 19 according to the audio signal acquired. That is to say, the navigation portion 19 can be operated in a hands-free manner. The voice on communication over the mobile phone connected to the wireless communication transmitter/receiver 17 is output to an in-vehicle apparatus side through the connector 30, and is caused to output from the speaker 155 of the in-vehicle apparatus 100. The operation signal on the menu screen or content screen displayed on the display portion 11 is output to the controller 140 of the in-vehicle apparatus 100 through the connector 30. The controller 140 controls the radio receiver 134 or the CD player 135 according to the operation signal transmitted from the controller 20 of the portable apparatus 10.

FIG. 10A shows a front view, top view, bottom view, left-side view, and right-side view of the portable apparatus 10. FIG. 10B is a back view of the portable apparatus 10.

The top face of the portable apparatus 10 is provided with a power button 55 for turning on or off the power of the portable apparatus. The bottom face of the portable apparatus 10 is provided with: an SD (Secure Digital) memory card slot 56; and the USB slot 57. Since the SD card or the USB memory stores the map information, by inserting the SD card or the USB memory into the slots, the controller 20 outputs the map information to the navigation portion 19.

Also, at a top face of the portable apparatus 10, there is provided the power button 55. The power of the portable apparatus 10 is turned on or off by the control of the in-vehicle apparatus 100, when the portable apparatus is attached to the in-vehicle apparatus 100. In addition, when the portable apparatus 10 is removed from the in-vehicle apparatus 100 and used alone, the power is operated on the basis of the on and off operations of the power button 55.

At a backside of the portable apparatus 10, there are provided: the connector 30 electrically connectable with the in-vehicle apparatus 100; and an engagement portion 58 to be engaged with a lock mechanism (not shown) provided at the in-vehicle apparatus 100 side.

In the present embodiment, when the detecting circuit 200 detects that the portable apparatus 10 is removed (detached) from the in-vehicle apparatus 100, the sound output from the portable apparatus 10 is cut (is put on mute) so as not to output from the speaker 155. The controller 140 controls the volume controller 141 or the power amplifier 146 to cut the sound output from the portable apparatus 10.

Here, the controller 140 puts the output to the speaker 155 on mute, while the navigation audio of the portable apparatus 10 is being output to the speaker 155 of the in-vehicle apparatus 100, and while the audio signal is being output to the speaker 155 of the in-vehicle apparatus 100 from the portable apparatus 10 after an external apparatus is connected by the external voice/image inputting portion 139 and the audio signal from the external apparatus is taken into the portable apparatus 10. The audio signal fed from the external apparatus connected to the external voice/image inputting portion 139 is temporarily output to the portable apparatus 10 side through the connector 150. The audio signal is output to the controller 140 of the in-vehicle apparatus 100 by the controller 20 of the portable apparatus 10.

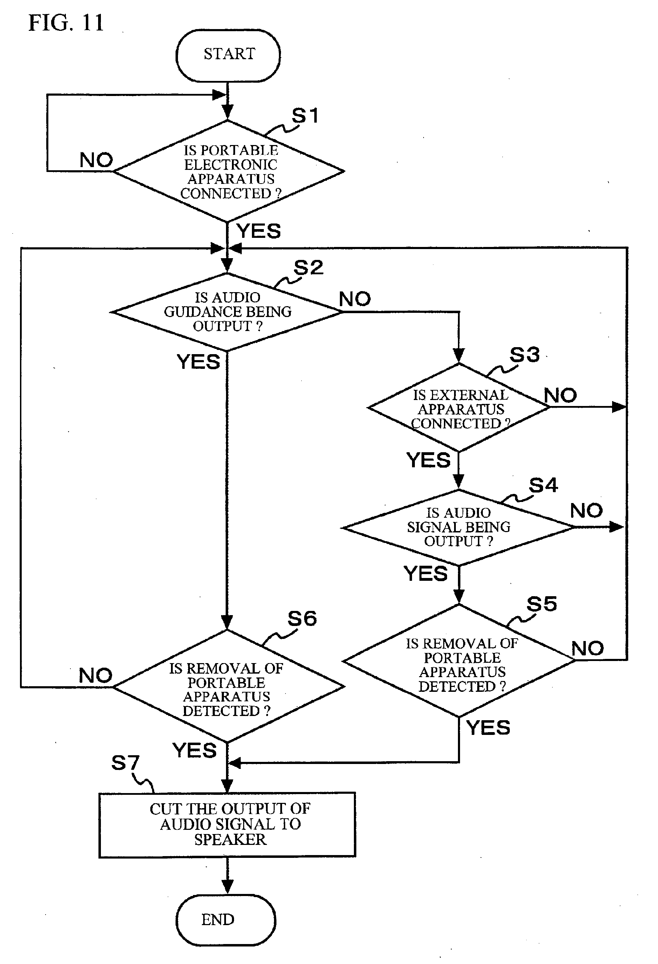

Referring to the flowchart shown in FIG. 11, the control procedure of the controller 140 in the in-vehicle apparatus 100 will be described.

The controller 140 firstly determines whether or not the portable apparatus 10 is connected to the in-vehicle apparatus 100 by use of a signal fed by the detecting circuit 200 (step S1). When it is determined that the portable apparatus 10 is connected to the in-vehicle apparatus 100 (step S1/YES), it is then determined whether or not the portable apparatus 10 is delivering audio guidance to a destination (whether or not the audio signal is being output from the portable apparatus 10) (step S2). If the audio signal is not output from the portable apparatus 10 (step S2/NO), it is then determined whether or not the external apparatus is connected to the external voice/image inputting portion 139 (step S3). If the external apparatus is not connected to the external voice/image inputting portion 139 (step S3/NO), the output of the audio signal from the portable apparatus 10 is monitored at step S2.

Also, if the external apparatus is connected to the external voice/image inputting portion 139 (step S3/YES), it is determined whether or not the audio signal of the external apparatus is being output to the speaker 155 (step S4).

If the audio signal of the external apparatus is being output to the speaker 155 (step S4/YES), the controller 140 monitors the removal of the portable apparatus 10 from the in-vehicle apparatus 100 by use of the detecting circuit 200 (step S5).

If the detecting circuit 200 detects the removal of the portable apparatus 10 from the in-vehicle apparatus 100 (step S5/YES), the output of the audio signal of the external apparatus fed via an external input line is attenuated (cut, put on mute) (step S7).

In addition, if the audio signal is output from the portable apparatus 10 attached to the in-vehicle apparatus 100 (step S3/YES), the controller 140 monitors the removal of the portable apparatus 10 from the in-vehicle apparatus 100 by use of the detecting circuit 200 (step S6).

If the detecting circuit 200 detects the removal of the portable apparatus 10 from the in-vehicle apparatus 100 (step S6/YES), the output of the audio guidance of the portable apparatus supplied via an external input line is attenuated (cut, put on mute) (step S7).

As described heretofore, in the present exemplary embodiment, when it is detected that the portable apparatus 10 is removed from the in-vehicle apparatus 100, by attenuating the output of the audio guidance from the portable apparatus 10 or the audio signal externally input (cut, put on mute), to the speaker 155, it is possible to suppress the generation of a noise sound at the time of removal of the portable apparatus.

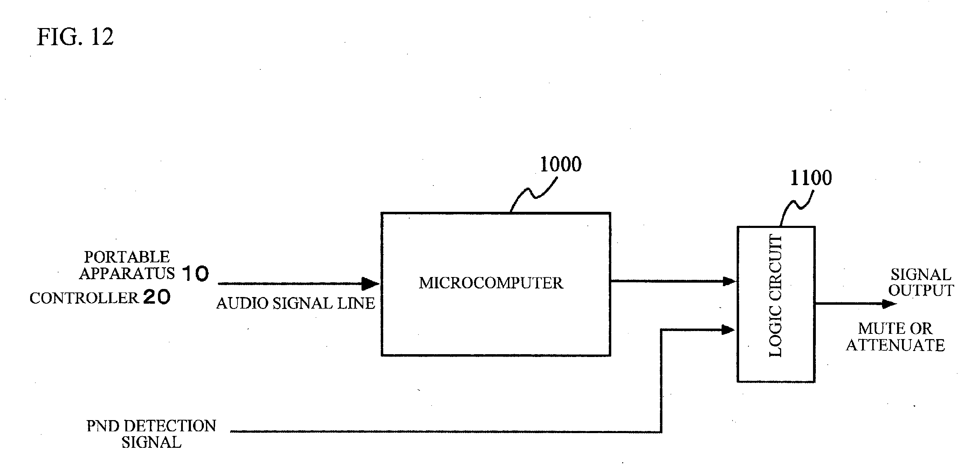

As a modification of the above-described embodiment, it may be configured such that when it is detected that the portable apparatus 10 is detached, by means of a detection signal of the detecting circuit 200, the controller 140 determines whether or not the audio signal fed by the portable apparatus 10 is caused resulting from the removal of the portable apparatus 10. For example, in the configuration shown in FIG. 12, a level variation of the audio signal is monitored by a microcomputer 1000 in the controller 140. When the level variation reaches a given value or more, a control signal for suppressing the output of the audio signal is output to a logic circuit 1100. This will suppress the sound output from the speaker 155.

In the above-described embodiment, the controller 140 of the in-vehicle apparatus 100 serves as a main controller, and controls the portable apparatus 10; however, the controller 20 of the portable apparatus 10 may be a main controller to control the in-vehicle apparatus 100.

In the above-described embodiment, the controller 140 controls cutting (putting on mute) to attenuate the output from the speaker 155, when the removal of the portable apparatus 10 is detected; however, the controller 140 may control weakening an output from the speaker 155. That is to say, the control of suppressing the output of the speaker 155 is to control the output so as not to emit a noise sound from the speaker at the time of removing the portable apparatus 10.

Furthermore, the portable apparatus 10 may be composed of a mobile telephone with the navigation functionality or a personal digital assistant (PDA). Furthermore, instead of the CD insertion/ejection slot 180 and the CD player 135, there may be provided an insertion/ejection slot and a player thereof for another memory media such as MD (Mini Disc), DVD (Digital Versatile Disk), memory card, or the like, and there may also provided insertion/ejection slots and players for multiple types of memory media. The term GPS as used in this application refers to any suitable satellite navigation system.

Although a few specific exemplary embodiments employed in the present invention have been shown and described, it would be appreciated by those skilled in the art that changes may be made in these exemplary embodiments without departing from the principles and spirit of the invention, the scope of which is defined in the claims.

## Claims

1. An electronic apparatus (100), to which a portable electronic apparatus (10) is detachably provided, the electronic apparatus (100) comprising:
a sound outputting portion (155) for outputting an audio signal output from the portable electronic apparatus (10) with the portable electronic apparatus attached to the electronic apparatus (100);
a detecting portion (200) configured to detect a removal of the portable electronic apparatus (10) from the electronic apparatus (100) and to output a detection signal; and
a controller (140) configured to receive the detection signal when it is detected by the detecting portion (200) that the portable electronic apparatus (10) has been removed, **characterised in that** the controller (140) is then operable to monitor a level variation of the audio signal supplied from the portable electronic apparatus (10) to the electronic apparatus (100) and to suppress the output of the audio signal to the sound outputting portion (155) when the level variation reaches a given value or more.

2. The electronic apparatus (100) as claimed in claim 1, wherein the controller (140) is operable to determine whether or not an unwanted noise of the audio signal is caused by the removal of the portable electronic apparatus (10), and to suppress the output of the audio signal to the sound outputting portion (155), when it is determined that the unwanted noise of the audio signal is caused resulting from the removal.

3. The electronic apparatus (100) as claimed in claim 1 or 2, wherein the controller (140) is configured to control a volume adjusting portion (141) for adjusting a volume of the audio signal, and to adjust the audio signal output from the sound outputting portion (155).

4. The electronic apparatus (100) as claimed in claim 1, 2 or 3, wherein the controller (140) is configured to control an amplifier (146) for amplifying the audio signal, and to adjust the audio signal output from the sound outputting portion (155).

5. An electronic system comprising:
an electronic apparatus (100) according to any of claims 1 to 4; and
a portable electronic apparatus (10) detachably provided in the electronic apparatus (100).

6. The electronic system as claimed in claim 5, wherein:
the portable electronic apparatus (10) is configured to output the audio signal fed from an external apparatus externally connected thereto; and
the controller (140) is configured to suppress the output of the audio signal to the sound outputting portion (155), when it is detected that the portable electronic apparatus (10) is removed.

7. A method of controlling audio output of an electronic apparatus (100), to which a portable electronic apparatus (10) is detachably provided, the method comprising:
detecting a removal of the portable electronic apparatus (10) from the electronic apparatus (100); **characterised by** further comprising
monitoring a level variation of the audio signal supplied from the portable electronic apparatus (10) to the electronic apparatus (100); and
suppressing an output of the audio output, when it is detected that the portable electronic apparatus (10) is removed and the level variation reaches a given value or more.

## Patentansprüche

1. Elektronische Vorrichtung (100), mit der eine tragbare elektronische Vorrichtung (10) lösbar bereitgestellt wird, wobei die elektronische Vorrichtung (100) umfasst
einen Tonausgabeabschnitt (155) für die Ausgabe eines Audiosignals, ausgegeben von der tragbaren elektronischen Vorrichtung (10), wenn die tragbare elektronische Vorrichtung an der elektronischen Vorrichtung (100) befestigt ist;
einen Erfassungsabschnitt (200), ausgelegt zum Erfassen eines Entfernens der tragbaren elektronischen Vorrichtung (10) von der elektronischen Vorrichtung (100) und zum Ausgeben eines Erfassungssignals; und
eine Steuerung (140), ausgelegt zum Empfangen des Erfassungssignals, wird vom Erfassungsabschnitt (200) erfasst, das die tragbare elektronische Vorrichtung (10) entfernt worden ist, **dadurch gekennzeichnet, dass** die Steuerung (140) dann ausführbar ist zum Überwachen einer Stärkenänderung des von der tragbaren elektronischen Vorrichtung (10) an die elektronische Vorrichtung (100) bereitgestellten Audiosignals und zum Unterdrücken der Ausgabe des Audiosignals an den Tonausgabeabschnitt (155), erreicht die Stärkenänderung einen gegebenen Wert oder mehr.

2. Elektronische Vorrichtung (100) gemäß Anspruch 1, wobei die Steuerung (140) ausführbar ist zum Feststellen ob ein unerwünschtes Rauschen des Audiosignals durch das Entfernen der tragbaren elektronischen Vorrichtung (10) ausgelöst wird oder nicht, und zum Unterdrücken der Ausgabe des Audiosignals an den Tonausgabeabschnitt (155), wird festgestellt, dass das unerwünschte Rauschen des Audiosignals durch das Entfernen ausgelöst wird.

3. Elektronische Vorrichtung (100) gemäß Anspruch 1 oder 2, wobei die Steuerung (140) ausgelegt ist zum Steuern eines Lautstärkeanpassungsabschnitts (141) zum Anpassen einer Lautstärke des Audiosignals, und zum Anpassen der Audiosignalausgabe vom Tonausgabeabschnitt (155).

4. Elektronische Vorrichtung (100) gemäß Anspruch 1, 2 oder 3, wobei die Steuerung (140) ausgelegt ist zum Steuern eines Verstärkers (146) zum Verstärken des Audiosignals, und zum Anpassen der Audiosignalausgabe vom Tonausgabeabschnitt (155).

5. Elektronisches System, umfassend
eine elektronische Vorrichtung (100) gemäß irgendeinem der Ansprüche 1 bis 4; und
eine tragbare elektronische Vorrichtung (10), lösbar in der elektronischen Vorrichtung (100) bereitgestellt.

6. Elektronisches System gemäß Anspruch 5, wobei
die tragbare elektronische Vorrichtung (10) ausgelegt ist zur Ausgabe des von einer extern dazu angeschlossenen externen Vorrichtung zugeschickten Audiosignals; und
die Steuerung (140) ausgelegt ist zum Unterdrücken der Ausgabe des Audiosignals an den Tonausgabeabschnitt (155), wird erfasst, dass die tragbare elektronische Vorrichtung (10) entfernt worden ist.

7. Verfahren zum Steuern von Audioausgabe einer elektronischen Vorrichtung (100), an die eine tragbare elektronische Vorrichtung (10) lösbar bereitgestellt wird, das Verfahren umfassend
Erfassen eines Entfernens der tragbaren elektronischen Vorrichtung (10) von der elektronischen Vorrichtung (100); **gekennzeichnet durch** das weitere Umfassen von
Überwachen einer Stärkenänderung des von der tragbaren elektronischen Vorrichtung (10) an die elektronische Vorrichtung (100) bereitgestellten Audiosignals; und
Unterdrücken einer Ausgabe der Audioausgabe, wird erfasst, dass die tragbare elektronische Vorrichtung (10) entfernt worden ist und die Stärkenänderung einen gegebenen Wert oder mehr erreicht.

## Revendications

1. Un appareil électronique (100) auquel un appareil électronique portatif (10) est fixé de manière amovible, l'appareil électronique (100) comprenant :
une partie de production de son (155) destinée à produire en sortie un signal audio produit à partir de l'appareil électronique portatif (10) avec l'appareil électronique portatif fixé à l'appareil électronique (100),
une partie détection (200) configurée de façon à détecter un retrait de l'appareil électronique portatif (10) de l'appareil électronique (100) et à produire en sortie un signal de détection, et
un dispositif de commande (140) configuré de façon à recevoir le signal de détection lorsqu'il est détecté par la partie détection (200) que l'appareil électronique portatif (10) a été retiré, **caractérisé en ce que** le dispositif de commande (140) est alors conçu de façon à surveiller une variation de niveau du signal audio fourni de l'appareil électronique portatif (10) à l'appareil électronique (100) et à supprimer la production en sortie du signal audio vers la partie de production de son (155) lorsque la variation de niveau atteint ou dépasse une valeur donnée.

2. L'appareil électronique (100) selon la revendication 1, où le dispositif de commande (140) est conçu de façon à déterminer si un bruit indésirable du signal audio est ou n'est pas provoqué par le retrait de l'appareil électronique portatif (10) et à supprimer la production en sortie du signal audio vers la partie de production de son (155) lorsqu'il est déterminé que le bruit indésirable du signal audio est provoqué en conséquence du retrait.

3. L'appareil électronique (100) selon la revendication 1 ou 2, où le dispositif de commande (140) est configuré de façon à commander une partie d'ajustement de volume (141) destinée à ajuster un volume du signal audio et à ajuster le signal audio produit à partir de la partie de production de son (155).

4. L'appareil électronique (100) selon la revendication 1, 2 ou 3, où le dispositif de commande (140) est configuré de façon à commander un amplificateur (146) destiné à amplifier le signal audio et à ajuster le signal audio produit à partir de la partie de production de son (155).

5. Un système électronique comprenant :
un appareil électronique (100) selon l'une quelconque des revendications 1 à 4, et
un appareil électronique portatif (10) fixé de manière amovible à l'appareil électronique (100).

6. Le système électronique selon la revendication 5, où :
l'appareil électronique portatif (10) est configuré de façon à produire en sortie le signal audio envoyé à partir d'un appareil externe raccordé de manière externe à celui-ci, et
le dispositif de commande (140) est configuré de façon à supprimer la production en sortie du signal audio vers la partie de production de son (155) lorsqu'il est détecté que l'appareil électronique portatif (10) a été retiré.

7. Un procédé de commande d'une sortie audio d'un appareil électronique (100) auquel un appareil électronique portatif (10) est fixé de manière amovible, le procédé comprenant :
la détection d'un retrait de l'appareil électronique portatif (10) de l'appareil électronique (100), **caractérisé en ce qu'**il comprend en outre
la surveillance d'une variation de niveau du signal audio fourni de l'appareil électronique portatif (10) à l'appareil électronique (100), et
la suppression d'une sortie de la sortie audio lorsqu'il est détecté que l'appareil électronique portatif (10) a été retiré et que la variation de niveau atteint ou dépasse une valeur donnée.
